# EUROPÄISCHE PATENTSCHRIFT

(11) **EP 3 284 319 B1**
(45) Veröffentlichungstag und Bekanntmachung des Hinweises auf die Patenterteilung: **29.07.2020**
(21) Anmeldenummer: 16722771.9
(22) Anmeldetag: 13.04.2016
(51) Int. Cl.: H05B 45/39

(54) **LEUCHTMITTELKONVERTER**
CONVERTER FOR LIGHT SOURCES
CONVERTISSEUR DE MOYEN D'ÉCLAIRAGE

(30) Priorität: 17.04.2015 DE 102015206982; 07.07.2015 AT 2012015 U
(43) Veröffentlichungstag der Anmeldung: 21.02.2018
(73) Patentinhaber: Tridonic GmbH & Co. KG, 6851 Dornbirn (AT)
(72) Erfinder: MARTE, Patrick, 6840 Götzis (AT); LOCHMANN, Frank, 88147 Esseratsweiler (DE)
(74) Vertreter: Rupp, Christian
(86) Internationale Anmeldenummer: PCT/AT2016/050093
(87) Internationale Veröffentlichungsnummer: WO 2016/164949

(56) Entgegenhaltungen:
- EP-A2- 1 257 048
- DE-A1-102013 224 749
- DE-A1-102014 214 746

## Beschreibung

Die Erfindung betrifft einen Leuchtmittelkonverter zum Betrieb wenigstens eines Leuchtmittels, vorzugsweise wenigstens einer LED oder LED Strecke. Zudem betrifft die Erfindung ein Verfahren zum Betrieb eines Leuchtmittekonverters. Weiter betrifft die Erfindung einen Leuchtmittelkonverter mit einer LLC Schaltung, bei der ausgehend von einer Wechselspannung ein (Serien-)Resonanzkreis versorgt ist, der wiederum zur Versorgung einer weiteren Konverterstufe zur direkten Versorgung eines Leuchtmittels dient. Die dem Leuchtmittel zugeführte Versorgungsspannung muss dann typischerweise in eine DC Spannung umgesetzt werden. Dies kann grundsätzlich beispielsweise durch einen Vollbrückengleichrichter erfolgen. Hinsichtlich energetischer Vorteile bietet sich jedoch eine Gleichrichtung ausgehend von einem Transformator an.

Ein "Leuchtmittelkonverter" ist eine elektrische Schaltung, die mit einer Eingangsspannung versorgbar ist und an die Leuchtmittel, wie bspw. eine oder mehrere LEDs, anschliessbar um somit definiert elektrisch betrieben zu werden.

Aus dem Stand der Technik ist das Dokument EP 1257048 A2 bekannt, welches einen resonanter Konverter betrifft. Der resonant Konverter umfasst einen Wechselrichter zur Erzeugung einer Wechselspannung und eine durch die Wechselspannung gespeisten Resonanzanordnung mit mindestens einer Kapazität und mindestens einem Transformator, wobei mindestens zwei Sekundäreinheiten vorgesehen sind, gebildet jeweils mindestens aus einer Sekundärwicklung des Transformators und mindestens einem Gleichrichtelement (Da, Db),von denen eine erste Sekundäreinheit und eine zweite Sekundäreinheit entgegengesetzt orientiert sind, und wobei mindestens zwei Ausgangsspannungen geliefert werden, von denen eine erste Ausgangsspannung von der ersten Sekundäreinheit und eine zweite Ausgangsspannung entweder von der zweiten Sekundäreinheit oder von der ersten und der zweiten Sekundäreinheit geliefert wird, wobei zusätzlich eine Regeleinrichtung zur Regelung der ersten und zweiten Ausgangsspannung durch Ansteuerung des Wechselrichters vorgesehen ist.

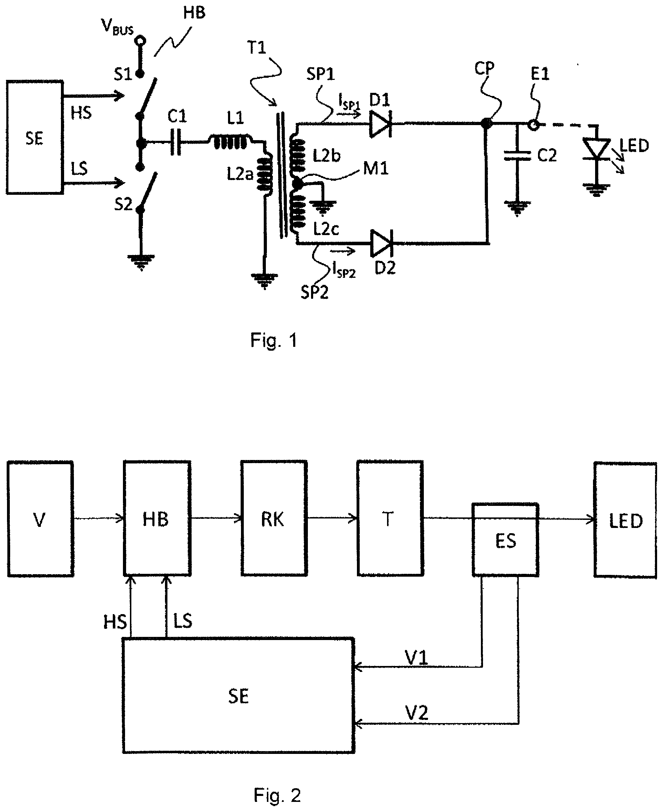

Weiterhin, aus dem Stand der Technik ist beispielsweise auch das Dokument WO 2014/060899 A2 bekannt, in dem ein Leuchtmittelkonverter in Fig. 1 beschrieben ist, der als Ausgangspunkt der Erfindung dienen kann. Ein ähnlicher Leuchtmittelkonverter ist auch in Fig. 1 gezeigt. Eine Steuerschaltung SE steuert eine Wechselrichter-Halbbrücke HB mit zwei Schaltern S1, S2 an, die in Serie geschaltet sind. Wie in Fig. 1 dargestellt, wird die Halbbrückenschaltung HB durch eine Eingangsspannung versorgt, die exemplarisch als Busspannung V_{BUS} dargestellt ist. Statt einer Busspannung, die normalerweise eine DC-Spannung, also eine Gleichspannung ist, kann auch eine gleichgerichtete Wechselspannung zur Versorgung der Halbbrücke dienen.

Ausgehend von einem Mittenpunkt der Halbbrücke HB, bzw. der beiden Schalter S1, S2, ist nun ein Resonanzkreis versorgt, der insbesondere aus einer Serienschaltung eines Kondensators C1, einer Induktivität L1 und einer zweiten Induktivität L2a gebildet ist. Ausgehend von der Induktivität L2a wird nun ein Transformator T1 mit einer Wechselspannung, d. h. einer AC-Spannung, gespeist. Der Transformator T1 weist die elektromagnetischen Induktivitäten, Spulen bzw. Wicklungen L2a, L2b, L2c auf. Die Induktivitäten L2b und L2c sind dabei auf der Sekundärseite des Transformators T1 angeordnet. Die Induktivitäten L2b und L2c sind als separate Induktivitäten dargestellt, da auf der Sekundärseite des Transformators T1 ein Mittenabgriff M1 vorgesehen ist.

Ausgehend von den Induktivitäten L2b und L2c ist dann jeweils ein Strompfad SP1 bzw. SP2 versorgt. Die Strompfade SP1 und SP2 verbinden somit jeweils eine Seite der Induktivität L2b, L2c mit einem Verbindungspunkt CP, wobei jeder Strompfad eine Diode zur Gleichrichtung aufweist.

Der erste Strompfad SP1 weist dabei die Diode D1 auf, während der zweite Strompfad SP2 eine zweite Diode D2 aufweist. Über den ersten Strompfad SP1 wird ein induzierte Strom I_{SP1} übertragen, über den Strompfad SP2 ein induzierter Strom I_{SP2}. Mit dem Verbindungspunkt CP ist andererseits ein Ausgangsanschluss E1 des Leuchtmittelkonverters verbunden mit dem beispielsweise eine Last LED, z.B. ein Leuchtmittel und insbesondere wenigstens eine LED anschließbar ist.

Zwischen dem Verbindungspunkt CP und dem Ausgangsanschluss E1 ist weiter ein Glättungskondensator C2 mit seiner potentialhöheren Seite verbunden, wobei die potentialniedrigere Seite des zweiten Kondensators C2 auf dem sekundärseitigen Massepotential des Transformators liegen kann.

Die Steuerschaltung SE steuert den potentialhöheren Schalter S1 der Halbbrücke HB über ein Ansteuersignal HS ("high side"-Signal) an, während sie den potentialniedrigeren Schalter S2 der Halbbrücke mit einem Signal LS ("low side"-Signal) ansteuert. Dabei schaltet die Steuerschaltung SE die Schalter S1, S2, die vorzugsweise als Transistoren, z. B. FET, MOSFET, ausgebildet sind, alternierend an, um am Mittelpunkt der Halbbrücke HB eine Wechselspannung für den Transformator T1 bereitzustellen.

In der Fig. 1 ist die Primärwicklung L2a des Transformators T1 auf ihrer potentialniedrigeren Seite mit der primärseitigen Masse verbunden, ebenso wie die potentialniedrigere Seite des Halbbrückenschalters S2. Der Strom bzw. die Spannung durch die primärseitige Induktivität L2a wird durch den Transformator T1 auf die Sekundärseite übertragen, wodurch in dem ersten Strompfad SP1 der Strom I_{SP1} und in dem zweiten Strompfad SP2 der Strom I_{SP2} induziert wird.

Der Mittenabgriff zwischen den sekundärseitigen Induktivitäten L2b und L2c dienen indessen dazu, an dem Verbindungspunkt CP Ströme bzw. Spannungen bereitzustellen, die im Wesentlichen symmetrisch um einen Nullpunkt liegen.

Über die Dioden D1 und D2 wird an dem Verbindungspunkt CP ein Gleichstrom bzw. eine Gleichspannung bereitgestellt, um die Last LED zu betreiben. Die sekundärseitige Masse kann entweder mit der primärseitigen Masse verbunden sein oder davon isoliert vorgesehen werden.

Insgesamt hängt dabei die am Ausgangsanschluss E1 liegende Spannung bzw. der anliegende Strom I_{SP1} bzw. I_{SP2} von der an der primärseitigen Induktivität des Transformators T1 anliegenden Spannung bzw. der Wellenform der Spannung ab. Diese sind durch eine Veränderung einer Taktung bzw. Schaltfrequenz der Schalter S1, S2 bzw. einem Tastgrad (duty cycle) der Halbbrückenschaltung HB, d. h. insbesondere eine Veränderung der Einschaltzeitdauer der Schalter S1, S2, einstellbar.

Ausgehend von der in Fig. 1 gezeigten Schaltung stellt sich nun das Problem, dass die Induktivitäten L2b, L2c auf der Sekundärseite des Transformators T1 (die insbesondere zwei Hälften einer einzigen sekundärseitigen Induktivität darstellen), nicht exakt symmetrisch sind und nicht die gleichen elektrischen bzw. symmetrische Parameter aufweisen. Dies führt zu einer asymmetrischen Belastung der auf der Sekundärseite des Transformators T1 nachfolgenden Bauteile und insbesondere der Dioden D1 und D2. Es kann sogar dazu kommen, dass lediglich ein Strompfad der Strompfade SP1, SP2 und damit eine Diode D1/D2 belastet wird.

Die Erfindung stellt nun eine Lösung bereit, die es erlaubt, selbst bei ungleichen bzw. asymmetrischen Induktivitäten L2b, L2c auf der Sekundärseite des Transformators T1 eine exakte Symmetrieform der sekundärseitig ausgegebenen Ströme, d. h. dem Strom an dem Verbindungspunkt CP bzw. an dem Ausgangsanschluss E1 zu erzielen. Die Erfindung stellt dafür einen Leuchtmittelkonverter und ein Verfahren zum Symmetrieren der Stromflüsse am Ausgang einer LLC-Resonanzschaltung gemäß der unabhängigen Ansprüche bereit. Weiterbildungen der Erfindung sind Gegenstand der abhängigen Ansprüche.

In einem ersten Aspekt wird ein Leuchtmittel-Konverter mit einer LLC-Resonanzschaltung bereitgestellt, wobei ausgehend von deren Sekundärseite Leuchtmittel, wie z.B. eine LED-Strecke, versorgbar sind, wobei die LLC-Resonanzschaltung aufweist: eine Halbbrückenschaltung mit zwei in Serie geschalteten Schaltern, die von einer Steuerschaltung angesteuert werden, einen ausgehend von einem Mittenpunkt der beiden Schalter versorgten Resonanzkreis, und einen ausgehend von einem Ausgang des Resonanzkreises mit AC-Spannung gespeisten Transformator, auf dessen Sekundärseite je ein Strompfad für jede der beiden Polaritäten der AC-Spannung vorgesehen ist. Eine Erfassungsschaltung ist vorgesehen, die ein Signal erfasst, das Ströme in den beiden Strompfaden und/oder deren Verhältnis widergibt, und die Steuerschaltung stellt die Taktung der beiden Schalter der Halbbrückenschaltung abhängig von dem von der Erfassungsschaltung erfassten Signal einstellt.

Die Erfassungsschaltung kann wenigstens einen Erfassungszweig aufweisen, der das den Strom durch wenigstens einen Signalpfad wiedergebende Signal erfasst.

Der wenigstens eine Erfassungszweig kann ein gleichgerichtetes Mischsignal auswerten.

Der wenigstens eine Erfassungszweig kann eine Abtast-Halte-Schaltung aufweisen.

Die Erfassungsschaltung kann für jeden Strompfad einen Erfassungszweig aufweisen.

Der wenigstens eine Erfassungszweig kann einen Schalter aufweisen, der mit einem der zwei Schaltern der Halbbrückenschaltung synchron getaktet ist.

An dem wenigstens einem Erfassungszweig kann eine Spannung und/oder ein Spannungswert erfasst wird, die proportional zu dem Strom durch einen der Strompfade ist.

Die Steuerschaltung kann abhängig von dem der Steuerschaltung zugeführten Signal einen Tastgrad der Halbbrückenschaltung verändert und insbesondere eine Einschaltzeitdauer wenigstens eines der beiden Schalter der Halbbrückenschaltung verkürzt oder verlängert.

Die Sekundärseite des Transformators kann eine mit einer primärseitigen Wicklung des Transformators gekoppelte Wicklung mit Mittelabgriff aufweist, von der ausgehend die Strompfade versorgt werden.

Jeder Strompfad kann eine Erfassungsinduktivität aufweisen, die mit wenigstens einer dritten Erfassungsinduktivität der Erfassungsschaltung elektromagnetisch gekoppelt sind. Der wenigstens eine Erfassungszweig der Erfassungsschaltung kann zwischen einem Gleichrichter und Filterschaltung angeordnet sein.

Die Steuerschaltung kann die Ansteuerung der der beiden Schalter der Halbbrückenschaltung durch Veränderung der Taktung solange verändern, bis das der Steuerschaltung zugeführten Signal einem Sollwert entspricht und/oder der Steuerschaltung zugeführte Signale insbesondere im Wesentlichen gleich sind, z.B. gleiche Signalwerte aufweisen.

Die Steuerschaltung kann die Ansteuerung der der beiden Schalter der Halbbrückenschaltung durch Veränderung der Taktung solange verändern, bis ein Sollwert für ein das der Steuerschaltung zugeführten Signal erreicht ist, das insbesondere ein Verhältnis von zwei Spannungswerten wiedergibt.

Die Erfassungsschaltung kann zwei Erfassungszweige aufweisen, deren Schalter jeweils synchron mit jeweils einem der beiden Schalter der Halbbrückenschaltung getaktet sind.

Die Erfassungsschaltung kann der Steuerschaltung zwei Signale zuführen, die jeweils einen den Strom durch einen Strompfad widergebenden elektrischen Parameter anzeigen, und/oder die beiden Signale in ein Verhältnis setzen und Informationen über das Verhältnis zur Steuereinheit übermittelt.

In einem weiteren Aspekt wird ein Verfahren zum Symmetrieren der Stromflüsse am Ausgang einer LLC-Resonanzschaltung ausgehend von deren Sekundärseite Leuchtmittel, wie z.B. eine LED-Strecke, versorgbar sind, bereitgestellt, wobei die LLC-Resonanzschaltung, wobei eine Steuerschaltung zwei in Serie geschaltete Schalter einer Halbbrückenschaltung ansteuert, und wobei die Halbbrückenschaltung ausgehend von einem Mittenpunkt der beiden Schalter einen Resonanzkreis versorgt, und ausgehend von einem Ausgang des Resonanzkreises ein Transformator mit AC-Spannung gespeist wird, auf dessen Sekundärseite je ein Strompfad für jede der beiden Polaritäten der AC-Spannung vorgesehen ist. Eine Erfassungsschaltung erfasst ein Signal, das Ströme in den beiden Strompfaden und/oder deren Verhältnis widergibt, und die Steuerschaltung stellt die Taktung der beiden Schalter der Halbbrückenschaltung abhängig von dem von der der Erfassungsschaltung erfassten Signal ein.

Die Erfindung wird nunmehr auch mit Bezug auf die Figuren beschrieben. Dabei zeigen:
- Fig. 1: eine Schaltungsanordnung nach dem Stand der Technik;
- Fig. 2: schematisch eine erfindungsgemäße Schaltungsanordnung;
- Fig. 3: exemplarisch eine erfindungsgemäße Schaltungsanordnung;
- Fig. 4: exemplarisch Erfassungswerte.

Fig. 2 zeigt schematisch eine Schaltung gemäß der Erfindung. Ausgehend von einer Versorgung V, insbesondere einer Gleichspannung oder einer gleichgerichteten Wechselspannung, z.B. einer gleichgerichteten Netzspannung, wird eine Halbbrückenschaltung HB versorgt, die einen Resonanzkreis RK mit einer Wechselspannung versorgt.

Die Halbbrücke weist dabei, wie für Fig. 1 beschrieben, vorzugsweise wenigstens zwei in Serie geschaltete Schalter S1 und S2 auf, die von einer Steuereinheit SE angesteuert werden. Dabei kann der potential höhere Schalter über das Ansteuersignal HS und der potential niedrigere Schalter über das Ansteuersignal LS angesteuert werden.

Mit dem Resonanzkreis RK ist die primärseitige Wicklung des Transformators T1 verbunden. Ausgehend von der sekundärseitigen Wicklung des Transformators T, die einen Mittenabgriff aufweist, der die sekundärseitige Induktivität quasi in zwei Induktivitäten teilt, wird wenigstens ein Strompfad versorgt. In diesen Strompfad ist nun eine Erfassungsschaltung ES integriert, die wenigstens ein Signal erfasst, dass den Strom in dem wenigstens einen Strompfad, vorzugsweise die Ströme in zwei Strompfaden oder deren Verhältnis, wiedergibt. Eine das Signal oder die Signale bzw. das Verhältnis wiedergebende Information ist dann der Steuerschaltung SE zugeführt, die abhängig davon einen Tastgrad bzw. eine Taktung der Schalter des Wechselrichters HB durch Veränderung der Ansteuersignale HS und/oder LS verändert.

In Fig. 2 sind die Signale V1 und V2 dargestellt, die von der Erfassungsschaltung ES der Steuerschaltung SE zugeführt sind. Dabei ist zu verstehen, dass, wenn lediglich ein das Verhältnis der Stromwerte wiedergebendes Signal oder lediglich ein Signal an die Steuereinheit SE übermittelt wird, lediglich dieses Signal von der Erfassungsschaltung ES der Steuerschaltung SE zugeführt werden muss. Ausgehend von dem Transformator T kann die Last LED elektrisch versorgt werden.

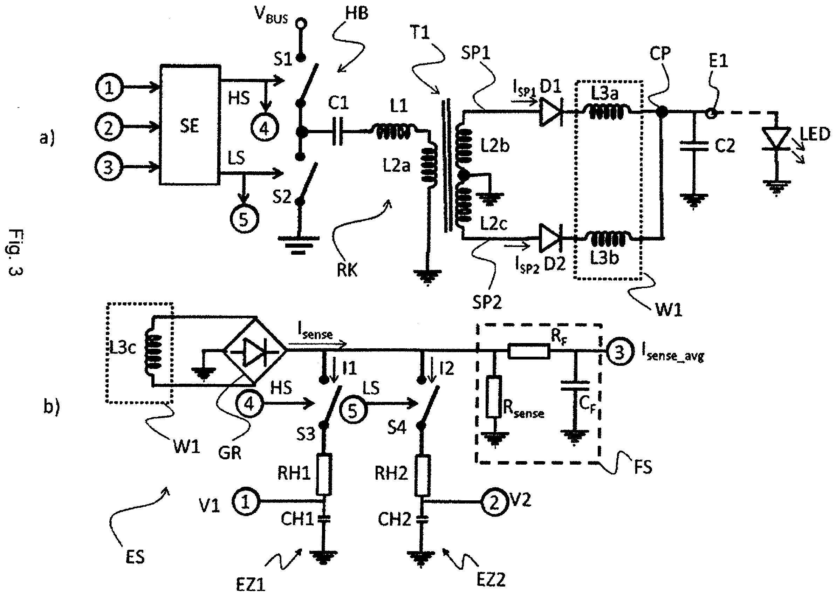

Details der erfindungsgemäßen Schaltung werden nun mit Blick auf die Figs. 3a und 3b beschrieben.

In Fig. 3A ist im Wesentlichen eine der Fig. 1 entsprechende Schaltung gezeigt. Entsprechend bezeichnen die gleichen Bezugszeichen aus Fig. 1 auch im Wesentliche gleiche Teile der Schaltung in Fig. 3a. Die elektrische Versorgung V ist in Fig. 3a wiederum als Spannung V_{BUS} dargestellt. Der wesentliche Unterschied ist hier, dass im ersten Strompfad SP1 zwischen der Diode D1 und dem Verbindungspunkt CP eine erste Erfassungsinduktivität L3a verbunden ist. Weiter ist im zweiten Strompfad SP2 zwischen der Diode D2 und dem Verbindungspunkt CP eine zweite Erfassungsinduktivität L3b vorgesehen. Elektromagnetisch gekoppelt mit der ersten und zweiten Erfassungsinduktivität L3a und L3b ist eine dritte Erfassungsinduktivität L3c, die vorzugsweise primärseitig hinsichtlich des Resonanzkreises RK bzw. des LLC-Resonanzkreises bzw. des Transformators T1 ist.

Die erste Erfassungsinduktivität L3a und die zweite Erfassungsinduktivität L3b bilden mit der dritten Erfassungsinduktivität L3c den Wandler W1 und insbesondere einen weiteren Transformator. An der dritten Erfassungswicklung L3c wird daher ein von dem Strom durch die erste Erfassungswicklung L3a abhängiger Strom erfasst, wenn ein Strom I_{SP1} durch den ersten Strompfad SP1 fließt, während ein von dem Strom I_{SP2} durch den zweiten Strompfad SP2 abhängiger Strom erfasst wird, wenn der Strom I_{SP2} durch den zweiten Strompfad SP2 fließt. Es ist folglich für jede Polarität der primärseitigen AC-Spannung sekundärseitig ein Strompfad für die induzierten Ströme bereitgestellt.

Der an der dritten Erfassungswicklung L3c erfasste Strom wird dann einem Gleichrichter GR zugeführt, der dann einen gleichgerichteten Strom Iₛₑₙₛₑ ausgibt. Gemäß der Erfindung wird nunmehr das Stromsignal Iₛₑₙₛₑ hinsichtlich einer Asymmetrie des Stromanteils durch die Strompfade SP1, SP2 bzw. durch die Dioden D1, D2 ausgewertet.

Wie in Fig. 3b gezeigt, wird das Stromsignal Iₛₑₙₛₑ ausgehend vom dem Gleichrichter einer bekannten Filterschaltung FS zugeführt, bestehend aus einem Filterwiderstand RF, einer Filterkapazität CF und einem Tastwiderstand R_{SENS}, und hinsichtlich einer Mittelwertbildung ausgewertet, so dass letztendlich der Mittelwert I_{sense_avg} des auf der Sekundärseite des Transformator T1 fließenden Stroms als zur Regelung des LED Stroms repräsentative Signal verwertet werden kann. Das Mittelwertsignal I_{sense_avg} dient dann zur Stromreglung, wobei es als Ist-Signal verwendet wird und als Stellgröße für die Taktung der Schalter S1, S2 des Wechselrichters HB verwendet werden kann. Entsprechend wird das Mittelwertsignal I_{sense_avg} der Steuerschaltung SE als Signal (3) zugeführt.

Erfindungsgemäß ist nunmehr vorgesehen, dass vor der Mittelwertbildung das kombinierte Stromsignal Iₛₑₙₛₑ in Werte aufgespaltet wird, die repräsentativ sind für den Strom durch die Strompfade SP1 und SP2, bzw. die an den Dioden D1 bzw. D2 auftretenden Ströme. Hierzu ist ein erster Erfassungszweig EZ1 vorgesehen, bestehend aus einer Serienschaltung aus einem dritten Schalter S3, der mit seiner potential höheren Seite mit dem Gleichrichter GR sowie dem Filterwiderstand RF verbunden ist, und einen ersten Widerstand RH1 sowie einer ersten Kapazität CH1 gebildet wird. Zwischen dem ersten Widerstand RH1 und der ersten Kapazität CH1 wird dabei ein Spannungssignal V1 erfasst, das die über der ersten Kapazität CH1 abfallende Spannung wiedergibt.

Ein zweiter Erfassungszweig EZ2 aus einer Serienschaltung eines vierten Schalters S4, eines zweiten Widerstands RH2 und einer zweiten Kapazität CH2 ist ebenfalls zwischen dem Gleichrichter GR und der Filterschaltung verbunden. Dabei ist der potential höhere Anschluss des vierten Schalters S4 mit dem Gleichrichter GR sowie dem Filterwiderstand R_{F} verbunden, während seine potential niedrigere Seite mit der einen Seite des zweiten Widerstands RH2 verbunden ist. Auf der anderen Seite des zweiten Widerstands RH2 ist die zweite Kapazität CH2 verbunden, die andererseits auf einem Massepotential liegt. Zwischen dem zweiten Widerstand RH2 und der zweiten Kapazität CH2 wird dabei das Messsignal V2 erfasst, das eine über der zweiten Kapazität CH2 abfallende Spannung wiedergibt.

Im ersten Erfassungszweig EZ1 fließt bei aktiviertem dritten Schalter S3 der Strom I2, im zweiten Erfassungszweig EZ2 bei aktiviertem vierten Schalter S4 der Strom I2.

Entscheidend ist nun, dass der dritte Schalter S3 und der vierte Schalter S4 synchron mit den Schaltern S1, S2 der Halbbrücke HB angesteuert werden. Beispielsweise wird der dritte Schalter S3 synchron mit dem potential höheren Schalter der Halbbrücke S1 angesteuert, während der vierte Schalter S4 synchron mit dem potential niedrigeren Schalter S2 der Halbbrücke HB angesteuert wird. Entsprechend wird der dritte Schalter S3 ausgehend von der Steuerschaltung SE mit dem Ansteuersignal HS angesteuert, während der vierte Schalter S4 mit dem Ansteuersignal LS angesteuert wird, oder anders herum.

Grundsätzlicher Gedanke der Erfindung ist es, dass die Ströme durch die Dioden D1 bzw. D2 separat ausgewertet werden können. Im vorliegenden Fall erfolgt eine nachträgliche Aufsplittung des Stromsignals Iₛₑₙₛₑ, da die Kombination der beiden Ströme I_{SP2} und I_{SP1} bereits für die Mittelwertbildung vorgesehen ist.

Alternativ könnte auch zu der ersten Erfassungsinduktivität L3a und zu der zweiten Erfassungsinduktivität L3b eine separate gekoppelte dritte bzw. vierte Erfassungsinduktivität zur Auswertung vorgesehen sein. Auch dann könnte ein entsprechendes Spannungs- bzw. Stromsignal an die Steuerschaltung SE vermittelt werden. Weiter kann es vorgesehen sein, dass die Erfassungsschaltung ES aus den Erfassungssignalen V1 und V2 ein Verhältnis bestimmt und dieses als ein einziges Signal der Steuerschaltung SE übermittelt. Dazu kann in der Erfassungsschaltung ES eine entsprechende Schaltung zur Bildung des Verhältniswerts vorgesehen sein.

In Kenntnis des wenigstens einen Signals, das von der Erfassungsschaltung ES an die Steuerschaltung SE zugeführt wird, und das die Ströme durch die Dioden D1 bzw. D2 wiedergibt, kann nun eine Asymmetrie der sekundärseitigen Induktivitäten L2b, L2c des Transformators T1 in nicht mechanischer Weise, sondern in regelungstechnischer Weise beseitigt werden, indem im Wege einer Rückführregelung für diese Asymmetrie der zugeführte Wert zur Änderung der Taktung der Halbbrückenschalter S1, S2 und insbesondere zur Veränderung des Tastgrads (bzw. des duty cycles) der Halbbrücke HB verwendet wird.

Im in Fig. 3b gezeigten Ausführungsbeispiel werden die Erfassungssignale V1 und V2, die entsprechend Spannungssignale sind, die die Ströme durch die Dioden D1 bzw. D2 wiedergeben, durch die Steuerschaltung SE (insbesondere IC, ASIC, Mikrocontroller) ausgewertet, die dann die Schalter S1, S2 der Halbbrücke HB entsprechend ansteuert. Zudem kann es vorgesehen sein, dass die Erfassungsschaltung ES einen eigenen Mikrokontroller, ASIC oder IC aufweist, der einer weiteren Steuereinheit, das Rückführsignal zuführt, woraufhin diese Steuereinheit dann die Ansteuerung der Wechselrichterschalter S1, S2 verändert.

Der Resonanzkreis bzw. der LLC Resonanzkreis wird mit dem Transformator T1 mit Mittelpunktabzapfung dazu verwendet, um einen etwas höheren Wirkungsgrad zu erreichen. Das von der Erfindung gelöste Problem adressiert also, dass abhängig vom Betriebspunkt der Strom durch die Sekundärwindungen L2b, L2c unterschiedlich sein kann. Insbesondere verhindert die Erfindung, dass der gesamte Ausgangsstrom des Transformators T1 über lediglich einen der Strompfade SP1, SP2, d. h. über eine der sekundärseitigen Induktivitäten L2b, L2c fließt, was auch eine erhebliche elektrische sowie thermische Belastung des Transformators T1 darstellt. Während typischerweise die Halbbrücke HB mit einem Tastgard (duty cycle) von 50 % arbeitet, d. h. dass die Schalter S1, S2 der Halbbrücke, unter möglicher Berücksichtigung einer tot-Zeit, im Wesentlichen zu gleichen Teilen aktiv sind, gleicht die erfindungsgemäße Lösung eine etwaige Asymmetrie dadurch aus, dass der Tasstgard (duty cycle) der Halbbrücke HB korrigiert wird und insbesondere eine Einschaltzeitdauer und/oder Ausschaltzeitdauer der Halbbrückenschalter S1, S2 verändert wird.

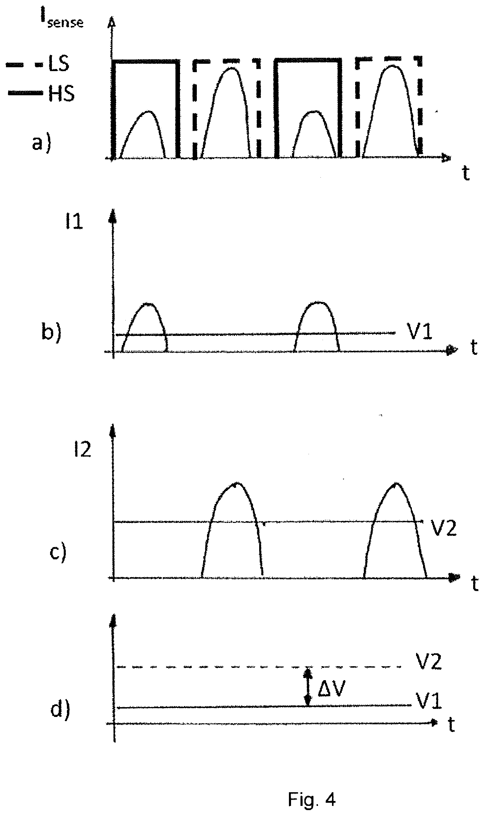

Figs. 4a-c zeigen schematisch, wie sich bei einer Asymmetrie bei im Wesentlichen gleicher Ansteuerung der Halbbrückenschalter S1, S2 durch die Ansteuersignale LS und HS unterschiedliche Ströme in den Strompfaden SP1, SP2 ergeben können.

Während die Erfassungsschaltung ES an dem ersten Erfassungszweig EZ1 das Erfassungssignal V1 ermittelt, wenn, wie in Figs. 4a und 4b gezeigt, der Schalter S1 und der dritte Schalter S3 aktiviert sind durch Ansteuerung mittels des Signals HS, ermittelt der zweite Erfassungszweig EZ2 das Erfassungssignal V2, wenn, wie in Figs. 4a und 4c gezeigt, der Schalter S2 und der vierte Schalter S4 aktiviert sind durch Ansteuerung mittels des Signals LS.

Entsprechend ergibt sich, wie in Fig. 4d gezeigt, aus den Erfassungssignalen V1 und V2 eine Abweichung ΔV, die die Asymmetrie widerspiegelt. Entsprechend kann durch die Veränderung der Ansteuerung der Halbbrückenschalter S1, S2 durch die Veränderung der Ansteuersignale LS, HS eine Veränderung der Ströme I_{SP1,} I_{SP2} in den Strompfaden SP1, SP2 erzeugt werden. Insbesondere kann die Größe ΔV als Ist-Größe für die Asymmetrie verwendet werden, die dann der Steuerschaltung SE, die für die Ansteuerung der Halbbrückenschalter S1, S2 zuständig ist, dienen kann.

Der Strom der sekundären Induktivitäten L2b, L2c des Transformators T1 wird also über die Erfassungsinduktivitäten L3a bis L3c erfasst. Wie in Fig. 3b gezeigt, wird dieses Wechselstromsignal mittels eines Gleichrichters GR, insbesondere eines Brückengleichrichters gleichgerichtet. Durch Taktung der Schalter der Erfassungszweige EZ1, EZ2 erhält mann dann die Signale V1, V2, wie sie in den Figs. 4b und 4c gezeigt sind. Dabei verhält sich der Strom in den Induktivitäten L3a bis L3c synchron zum Schalten der Halbbrückenschalter S1, S2, die über die Steuersignale LS und HS angesteuert werden.

Dabei ist zu bemerken, dass es sich bei dem ersten Widerstand RH1 und der ersten Kapazität CH1 um eine Abtast-Halte-Schaltung ("sample-and-hold"-Schaltung) handelt. Das Gleiche ist für den zweiten Widerstand RH2 und die zweite Kapazität CH2 der Fall. Somit wird das über den dritten bzw. vierten Schalter S3, S4 erfasste Messsignal also jeweils einer Abtasthaltestufe zugeführt. Dadurch entsteht das Erfassungssignal V1, also die Spannung V1 an dem Erfassungspunkt (1), während das Erfassungssignal V2, bzw. das Spannungssignal an dem Erfassungspunkt (2) entsteht, wobei das Signal am Punkt (1) proportional ist zum Strom durch die erste Erfassungsinduktivität L3a, während das Erfassungssignal V2 proportional ist zum Strom durch die zweite Erfassungsinduktivität L3b.

Die Erfassungssignale können dann beispielsweise mit dem analog Digitalkonverter eines Mikrokontrollers ausgewertet werden, der dann den Tastgrad (duty cycle) des Wechselrichters HB verändert bis das Erfassungssignal V1 am Punkt (1) dem Erfassungssignal V2 am Punkt (2) entspricht.

## Patentansprüche

1. Leuchtmittel-Konverter mit einer LLC-Resonanzschaltung, ausgehend von deren Sekundärseite Leuchtmittel (LED) , wie z.B. eine LED-Strecke, versorgbar sind,
wobei die LLC-Resonanzschaltung aufweist:
- eine Halbbrückenschaltung (HB) mit zwei in Serie geschalteten Schaltern (S1, S2),
- eine Steuerschaltung (SE),
- einen ausgehend von einem Mittenpunkt (Ml) der beiden Schalter (Sl, S2) versorgten Resonanzkreis (RK) , und
- einen ausgehend von einem Ausgang des Resonanzkreises (RK) mit AC-Spannung gespeisten Transformator (Tl), auf dessen Sekundärseite je ein Strompfad (SP1, SP2) für jede der beiden Polaritäten der AC-Spannung vorgesehen ist,
wobei eine Erfassungsschaltung (ES) vorgesehen ist, welche ausgebildet ist, ein Signal (VI, V2 ) zu erfassen, das Ströme (ISPI, ISP2) in den beiden Strompfaden (SP1, SP2) wiedergibt, und wobei die Steuerschaltung (SE) ausgebildet ist, die Taktung der beiden Schalter (Sl, S2) der Halbbrückenschaltung (HB) abhängig von dem von der Erfassungsschaltung (ES) erfassten Signal (VI, V2 ) einzustellen, wobei die Erfassungsschaltung (ES) wenigstens einen Erfassungszweig (EZ1) aufweist, welcher ausgebildet ist, das den Strom durch den Strompfad (SP1) wiedergebende Signal zu erfassen, **dadurch gekennzeichnet, dass** der wenigstens eine Erfassungszweig (EZ1) ferner durch eine Serienschaltung eines dritten Schalters (S3), eines Widerstands (RH1) sowie einer Kapazität (CH1) gebildet ist und wobei der erste Erfassungszweig (EZ₁) zwischen einem Gleichrichter und einer Filterschaltung angeordnet ist, wobei ferner der dritte Schalter (S3) synchron mit einem der Schalter (S1) der Halbbrückenschaltung (HB) getaktet ist.

2. Leuchtmittel-Konverter nach Anspruch 1, **dadurch gekennzeichnet, dass** der wenigstens eine Erfassungszweig (EZ1) ausgebildet ist, ein gleichgerichtetes Signal (Isense) auszuwerten.

3. Leuchtmittel-Konverter nach einem der Ansprüche 1 oder 2, **dadurch gekennzeichnet,**
**dass** die Erfassungsschaltung (ES) für jeden Strompfad (SP1, SP2) einen Erfassungszweig (EZ1, EZ2) aufweist.

4. Leuchtmittel-Konverter nach einem der Ansprüche 1 oder 2, **dadurch gekennzeichnet,**
**dass** der wenigstens eine Erfassungszweig (EZ1) ausgebildet ist, eine Spannung und/oder ein Spannungswert zu erfassen, die proportional zu dem Strom durch den Strompfad (SP1) ist.

5. Leuchtmittel-Konverter nach einem der vorgehenden Ansprüche, **dadurch gekennzeichnet,**
**dass** die Steuerschaltung (SE) ausgebildet ist, abhängig von dem der Steuerschaltung (SE) zugeführten Signal (VI, V2) ein Tastverhältnis der Halbbrückenschaltung (HB) zu verändern und insbesondere eine Einschaltzeitdauer wenigstens eines der beiden Schalter (Sl, S2) der Halbbrücke (HB) zu verkürzen oder zu verlängern; und/oder dass die Steuerschaltung (SE) ausgebildet ist, die Ansteuerung der der beiden Schalter (Sl, S2) der Halbbrückenschaltung (HB) durch Veränderung der Taktung solange zu verändern, bis das der Steuerschaltung (SE) zugeführten Signal (VI, V2) einem Sollwert entspricht und/oder der Steuerschaltung zugeführte Signale (VI, V2) insbesondere im Wesentlichen gleich sind, z.B. gleiche Signalwerte aufweisen;
und/oder
**dass** die Steuerschaltung (SE) ausgebildet ist, die Ansteuerung der beiden Schalter (Sl, S2) der Halbbrückenschaltung durch Veränderung der Taktung solange zu verändern, bis ein Sollwert für das der Steuerschaltung (SE) zugeführte Signal (VI, V2) erreicht ist, das insbesondere ein Verhältnis von zwei Spannungswerten wiedergibt.

6. Leuchtmittel-Konverter nach einem der vorgehenden Ansprüche, **dadurch gekennzeichnet,**
**dass** jeder Strompfad (SP1, SP2) eine Erfassungsinduktivität (L3a, L3b) aufweist, die mit wenigstens einer dritten Erfassungsinduktivität (L3c) der Erfassungsschaltung (ES) elektromagnetisch gekoppelt sind .

7. Leuchtmittel-Konverter nach einem der vorgehenden Ansprüche, **dadurch gekennzeichnet,**
**dass** die Erfassungsschaltung (ES) weiterhin einen zweiten Erfassungszweig (EZ2) mit einem vierten Schalter (S4) aufweist, welcher synchron mit dem anderen Schalter (S2) der Halbbrückenschaltung (HB) getaktet ist, und/oder dass die Erfassungsschaltung (ES) ausgebildet ist, der Steuerschaltung (SE) zwei Signale (VI, V2) zuzuführen, die jeweils einen den Strom (ISPI, ISP2) durch einen Strompfad (SP1, SP2) wiedergebenden elektrischen Parameter anzeigen, und/oder die beiden Signale (VI, V2) in ein Verhältnis zu setzen und Informationen über das Verhältnis zur Steuereinheit (SE) zu übermitteln.

8. Verfahren zum Symmetrieren der Stromflüsse am Ausgang einer LLC-Resonanzschaltung, ausgehend von deren Sekundärseite Leuchtmittel, wie z.B. eine LED-Strecke, versorgbar sind, wobei eine Steuerschaltung (SE) zwei in Serie geschaltete Schalter (S1, S2) einer Halbbrückenschaltung (HB) ansteuert, und wobei die Halbbrückenschaltung (HB) ausgehend von einem Mittenpunkt (M1) der beiden Schalter (S1, S2) einen Resonanzkreis (RK) versorgt, und ausgehend von einem Ausgang des Resonanzkreises (RK) ein Transformator (Tl) mit AC-Spannung gespeist wird, auf dessen Sekundärseite je ein Strompfad (SP1, SP2) für jede der beiden Polaritäten der AC-Spannung vorgesehen ist, wobei eine Erfassungsschaltung (ES) ein Signal (V1, V2) erfasst, das Ströme (ISP1, ISP2) in den beiden Strompfaden (SP1, SP2) wiedergibt, und die Steuerschaltung (SE) die Taktung der beiden Schalter (S1, S2) der Halbbrückenschaltung (HB) abhängig von dem von der Erfassungsschaltung (ES) erfassten Signal (V1, V2) einstellt, wobei Erfassungsschaltung (ES) einen ersten Erfassungszweig (EZ1) aufweist, welcher ausgebildet ist, das den Strom durch den Strompfad (SP1) wiedergebende Signal zu erfassen, **dadurch gekennzeichnet, dass** der erste Erfassungszweig (EZ1) ferner durch eine Serienschaltung eines dritten Schalters (S3), eines Widerstands (RH1) sowie einer Kapazität (CH1) gebildet ist und wobei der erste Erfassungszweig (EZ₁) zwischen dem Gleichrichter und der Filterschaltung gebunden ist, wobei ferner der dritte Schalter (S3) synchron mit einem der Schalter (S1) der Halbbrückenschaltung (HB) getaktet ist.

## Claims

1. Light source converter having an LLC resonant circuit, from the secondary side of which light sources (LEDs) such as, for example, an LED string can be supplied.
wherein the LLC resonant circuit has:
- a half-bridge circuit (HB) with two switches (S1, S2) connected in series,
- a control circuit (SE),
- a resonant circuit (RK) supplied starting from a center point (M1) of the two switches (S1, S2), and
- a transformer (T1) fed with AC voltage from an output of the resonant circuit (RK), on the secondary side of which transformer (T1) is respectively provided one current path (SP1, SP2) for each of the two polarities of the AC voltage,
wherein a detection circuit (ES) is provided which is designed to detect a signal (VI, V2) which represents currents (ISPI, ISP2) in the two current paths (SP1, SP2), and
wherein the control circuit (SE) is designed to set the timing of the two switches (S1, S2) of the half-bridge circuit (HB) as a function of the signal (VI, V2) detected by the detection circuit (ES), wherein the detection circuit (ES) has at least one detection branch (EZ1) which is designed to detect the signal representing the current through the current path (SP1),
**characterized in that** the at least one detection branch (EZ1) is further formed by a series circuit of a third switch (S3), a resistor (RH1), and a capacitor (CH1), and wherein the first detection branch (EZ₁) is arranged between a rectifier and a filter circuit,
wherein the third switch (S3) is further clocked synchronously with one of the switches (S1) of the half-bridge circuit (HB).

2. Light source converter according to claim 1, **characterized in that**
the at least one detection branch (EZ1) is designed to evaluate a rectified signal (Isense).

3. Light source converter according to one of claims 1 or 2, **characterized in that**
the detection circuit (ES) has a detection branch (EZ1, EZ2) for each current path (SP1, SP2).

4. Light source converter according to one of claims 1 or 2, **characterized in that**
the at least one detection branch (EZ1) is designed to detect a voltage and/or a voltage value which is proportional to the current through the current path (SP1).

5. Light source converter according to one of the preceding claims, **characterized in that**
the control circuit (SE) is designed to vary a duty cycle of the half-bridge circuit (HB) as a function of the signal (VI, V2) supplied to the control circuit (SE), and in particular to shorten or lengthen a switch-on duration of at least one of the two switches (S1, S2) of the half-bridge (HB); and/or
the control circuit (SE) is designed to vary the activation of the the two switches (S1, S2) of the half-bridge circuit (HB) by varying the timing until the signal (VI, V2) supplied to the control circuit (SE) corresponds to a nominal value, and/or signals (VI, V2) supplied to the control circuit are in particular substantially identical, e.g. have identical signal values;
and/or
the control circuit (SE) is designed to vary the activation of the two switches (S1, S2) of the half-bridge circuit by varying the timing until a nominal value for the signal (VI, V2) supplied to the control circuit (SE) is reached, which in particular represents a ratio of two voltage values.

6. Light source converter according to one of the preceding claims, **characterized in that**
each current path (SP1, SP2) has a detection inductance (L3a, L3b) that are electromagnetically coupled to at least one third detection inductance (L3c) of the detection circuit (ES) .

7. Light source converter according to one of the preceding claims, **characterized in that**
the detection circuit (ES) furthermore has a second detection branch (EZ2) having a fourth switch (S4) which is clocked synchronously with the other switch (S2) of the half-bridge circuit (HB),
and/or
the detection circuit (ES) is designed to supply two signals (VI, V2) to the control circuit (SE), which two signals (VI, V2) respectively indicate an electrical parameter representing the current (ISPI, ISP2) through a current path (SP1, SP2), and/or to set the two signals (VI, V2) in a ratio and to transmit information about the ratio to the control unit (SE).

8. Method for making symmetrical the current flows at the output of an LLC resonant circuit from the secondary side of which light sources such as, for example, an LED string can be supplied, wherein a control circuit (SE) activates two switches (S1, S2) of a half-bridge circuit (HB) connected in series, and wherein the half-bridge circuit (HB) supplies a resonant circuit (RK) starting from a center point (M1) of the two switches (S1, S2),
and a transformer (T1) is fed with AC voltage starting from an output of the resonant circuit (RK), on the secondary side of which transformer (T1) is respectively provided one current path (SP1, SP2) for each of the two polarities of the AC voltage,
wherein a detection circuit (ES) detects a signal (V1, V2) representing currents (ISP1, ISP2) in the two current paths (SP1, SP2), and the control circuit (SE) sets the timing of the two switches (S1, S2) of the half-bridge circuit (HB) as a function of the signal (V1, V2) detected by the detection circuit (ES),
wherein the detection circuit (ES) has a first detection branch (EZ1) which is designed to detect the signal representing the current through the current path (SP1),
**characterized in that**
the first detection branch (EZ1) is further formed by a series circuit of a third switch (S3), a resistor (RH1), and a capacitor (CH1), and wherein the first detection branch (EZ₁) is connected between the rectifier and the filter circuit, wherein furthermore the third switch (S3) is clocked synchronously with one of the switches (S1) of the half-bridge circuit (HB).

## Revendications

1. Convertisseur de moyen d'éclairage comprenant un circuit de résonance LLC, depuis le côté secondaire duquel un moyen d'éclairage (LED), par ex. une branche à LED, peut être alimenté,
le circuit de résonance LLC présentant :
- un circuit en demi-pont (HB) comportant deux commutateurs (SI, S2) commutés en série,
- un circuit de commande (SE),
- un circuit de résonance (RK) alimenté depuis un point central (MI) des deux commutateurs (S1, S2) et
- un transformateur (TI) alimenté en tension alternative à partir d'une sortie du circuit de résonance (RK), sur le côté secondaire duquel un trajet de courant (SP1, SP2) respectif est situé pour chacune des deux polarités de la tension alternative,
un circuit de détection (ES) étant utilisé, lequel est conçu pour détecter un signal (VI, V2), lequel reflète des courants (ISPI, ISP2) dans les deux trajets de courant (SP1, SP2) et
le circuit de commande (SE) étant conçu pour régler le cadencement des deux commutateurs (SI, S2) du circuit en demi-pont (HB) en fonction du signal (VI, V2) détecté par le circuit de détection (ES),
le circuit de détection (ES) présentant au moins une branche de détection (EZ1), laquelle est conçue pour détecter le signal reflétant le courant circulant à travers le trajet de courant (SP1),
**caractérisé en ce que** ladite au moins une branche de détection (EZ1) est en outre formée au moyen d'une commutation en série d'un troisième commutateur (S3), d'une résistance (RH1) ainsi que d'un condensateur (CH1) et
la première branche de détection (EZ₁) étant disposée entre un redresseur et un circuit de filtrage,
le troisième commutateur (S3) étant en outre cadencé de manière synchrone avec l'un des commutateurs (S1) du circuit en demi-pont (HB).

2. Convertisseur de moyen d'éclairage selon la revendication 1, **caractérisé en ce que**
ladite au moins une branche de détection (EZ1) est conçue pour évaluer un signal redressé (Isense).

3. Convertisseur de moyen d'éclairage selon l'une quelconque des revendications 1 ou 2, **caractérisé en ce que**
le circuit de détection (ES) présente une branche de détection (EZ1, EZ2) pour chaque trajet de courant (SP1, SP2).

4. Convertisseur de moyen d'éclairage selon l'une quelconque des revendications 1 ou 2, **caractérisé en ce que**
ladite au moins une branche de détection (EZ1) est conçue pour détecter une tension et/ou une valeur de tension, laquelle est proportionnelle au courant circulant à travers le trajet de courant (SP1).

5. Convertisseur de moyen d'éclairage selon l'une quelconque des revendications précédentes, **caractérisé en ce que**
le circuit de commande (SE) est conçu pour modifier, en fonction du signal (VI, V2) amené au circuit de commande (SE), un rapport cyclique du circuit en demi-pont (HB) et, en particulier, pour raccourcir ou allonger une durée d'enclenchement d'au moins un des deux commutateurs (SI, S2) du demi-pont (HB) ; et/ou
**en ce que** le circuit de commande (SE) est conçu pour modifier la commande des des deux commutateurs (SI, S2) du circuit en demi-pont (HB) par modification du cadencement jusqu'à ce que le signal (VI, V2) amené au circuit de commande (SE) corresponde à une valeur de consigne et/ou jusqu'à ce que les signaux (VI, V2) amenés au circuit de commande soient en particulier essentiellement les mêmes, par exemple présentent les mêmes valeurs de signal ;
et/ou
**en ce que** le circuit de commande (SE) est conçu pour modifier la commande des deux commutateurs (SI, S2) du circuit en demi-pont par modification du cadencement jusqu'à ce qu'une valeur de consigne pour le signal (VI, V2) amené au circuit de commande (SE) soit atteinte, laquelle reflète, en particulier, un rapport de deux valeurs de tension.

6. Convertisseur de moyen d'éclairage selon l'une quelconque des revendications précédentes, **caractérisé en ce que**
chaque trajet de courant (SP1, SP2) présente une inductance de détection (L3a, L3b), lesquelles sont couplées de manière électromagnétique à au moins une troisième inductance de détection (L3c) du circuit de détection (ES) .

7. Convertisseur de moyen d'éclairage selon l'une quelconque des revendications précédentes, **caractérisé en ce que**
le circuit de détection (ES) présente en outre une deuxième branche de détection (EZ2) dotée d'un quatrième commutateur (S4), lequel est cadencé de manière synchrone avec l'autre commutateur (S2) du circuit en demi-pont (HB),
et/ou
**en ce que** le circuit de détection (ES) est conçu pour amener au circuit de commande (SE) deux signaux (VI, V2), chaque signal indiquant un paramètre électrique reflétant le courant (ISPI, ISP2) circulant à travers un trajet de courant (SP1, SP2) et/ou pour mettre les deux signaux (VI, V2) en relation et pour transmettre des informations sur ladite relation à l'unité de commande (SE).

8. Procédé de symétrisation des flux de courant à la sortie d'un circuit de résonance LLC, à partir du côté secondaire duquel un moyen d'éclairage, par exemple une branche à LED, peut être alimenté,
un circuit de commande (SE) commandant deux commutateurs (S1, S2) commutés en série d'un circuit en demi-pont (HB) et
le circuit en demi-pont (HB) alimentant, à partir d'un point central (M1) des deux commutateurs (S1, S2), un circuit de résonance (RK),
et, à partir d'une sortie du circuit de résonance (RK), un transformateur (TI) étant alimenté en tension alternative, sur le côté secondaire duquel est situé un trajet de courant (SP1, SP2) pour chacune des deux polarités de la tension alternative,
un circuit de détection (ES) détectant un signal (V1, V2), lequel reflète des courants (ISP1, ISP2) dans les deux trajets de courant (SP1, SP2) et le circuit de commande (SE) réglant le cadencement des deux commutateurs (S1, S2) du circuit en demi-pont (HB) en fonction du signal (V1, V2) détecté par le circuit de détection (ES),
le circuit de détection (ES) présentant une première branche de détection (EZ1), laquelle est conçue pour détecter le signal reflétant le courant circulant à travers le trajet de courant (SP1),
**caractérisé en ce que** la première branche de détection (EZ1) est en outre formée au moyen d'une commutation en série d'un troisième commutateur (S3), d'une résistance (RH1) et d'un condensateur (CH1) et
la première branche de détection (EZ₁) étant liée entre le redresseur et le circuit de filtrage,
le troisième commutateur (S3) étant en outre cadencé de manière synchrone avec l'un des commutateurs (S1) du circuit en demi-pont (HB).
